# EUROPEAN PATENT SPECIFICATION

(11) **EP 3 395 897 B1**
(45) Date of publication and mention of the grant of the patent: **04.06.2025**
(21) Application number: 16877446.1
(22) Date of filing: 20.10.2016
(51) Int. Cl.: C08L 69/00, C08L 55/02, C08K 9/00, C08K 3/34, C08K 3/08, C08K 3/30

(54) **POLYCARBONATE COMPOSITE MATERIAL**
POLYCARBONATVERBUNDMATERIAL
MATÉRIAU COMPOSITE DE POLYCARBONATE

(30) Priority: 25.12.2015 CN 201510988096
(43) Date of publication of application: 31.10.2018
(73) Proprietor: Kingfa Sci. & Tech. Co., Ltd., Guangzhou, Guangdong 510663 (CN)
(72) Inventor: CEN, Yin, Guangzhou Guangdong 510663 (CN); TONG, Wei, Guangzhou Guangdong 510663 (CN); AI, Junwei, Guangzhou Guangdong 510663 (CN); XIE, Xiuhao, Guangzhou Guangdong 510663 (CN); DONG, Xiangmao, Guangzhou Guangdong 510663 (CN); CHEN, Yongwen, Guangzhou Guangdong 510663 (CN); SUN, Donghai, Guangzhou Guangdong 510663 (CN); YE, Nanbiao, Guangzhou Guangdong 510663 (CN)
(74) Representative: Petraz, Gilberto Luigi
(86) International application number: PCT/CN2016/102714
(87) International publication number: WO 2017/107635

(56) References cited:
- EP-A1- 2 517 855
- WO-A1-2012/098513
- WO-A1-2014/156345
- CN-A- 1 537 145
- CN-A- 101 171 303
- CN-A- 105 102 538
- CN-A- 105 482 426
- JP-A- 2015 074 675
- SU-A1- 1 518 341

## Description

### TECHNICAL FIELD

The present invention belongs to the technical field of modification of polymer materials, and specifically relates to a polycarbonate composite material that has an obviously improved impact strength and an obviously improved molding tenacity, with a stable long-term property.

### BACKGROUND

Polycarbonate (PC) has excellent heat resistance and relatively high impact resistance, and it is widely used in external material fields such as electrical/electronic products and automotive parts. In recent years, wall-thinning of articles molded by resin compositions has received a development, and requirements for improving various physical properties of the articles are continuously increasing.

The polycarbonate may obtain a better rigidity by adding a filler in the polycarbonate, but a ductility will be greatly decreased. In order to improve an impact strength of the materials, the impact strength of the composition is improved by adding an impact modifier in a present technology, but a thermal deformation temperature and a flowing property of product will be influenced. There is also a technology that improves the impact strength by selecting a filler size and a surface treatment, but a range of the improvement is rather small and the effect isn't obvious.

Besides, the filler added will inevitably bring alkaline metal ions. The presence of the alkaline metal ions will not only influence the color of the filler, but also cause rapid decreases in a molding tenacity and a molding use stability of the PC product.

US 2002/132899 A1 describes a polycarbonate composition containing inorganic material with an anisotropic particle geometry and with an iron content of less than about 100 ppm.

The present invention found in surprise that in a polycarbonate composite material containing the filler, by adding a trace amount of iron element and copper element, not only a pretreatment for filler powders can be avoided, but also the alkaline ions in a system can be stabilized, so that the polycarbonate composite material prepared has an obviously improved impact strength and an obviously improved molding tenacity, and can also combine the rigidity brought by the filler, with a stable long-term property.

### SUMMARY OF THE INVENTION

The present invention is defined in and by the appended claims. An object of the present invention is to provide a polycarbonate composite material. By adding a trace amount of iron element and copper element in the polycarbonate composite material, the polycarbonate composite material can be enabled to have a molding tenacity, an impact strength and a flexural modulus that are obviously improved, and also to combine a rigidity brought by a filler, having an excellent molding use stability and color stability.

The present invention is accomplished by the following technical solution:
A polycarbonate composite material, comprises the following components:
30-80 parts by weight of a polycarbonate;
5-40 parts by weight of an ABS;
5-80 parts by weight of a filler;
wherein,
based on a total weight of the polycarbonate composite material, a weight content of iron element is 5 ppm-40 ppm, and a weight content of copper element is 0.1 ppm-10 ppm;
the polycarbonate has a PDI coefficient ranging from 2.0 to 4.0;
a melt flow rate of the polycarbonate measured according to ASTM D1238 at 300°C under a load of 1.2 kg is 3g/10min-30g/10min;
the ABS copolymer has an average particle size ranging from 500 nm to 2000 nm;
a glass transition temperature of the ABS copolymer is greater than 25°C; and
the filler is a mineral filler.

In the polycarbonate composite material, a better rigidity can be obtained by adding a certain amount of fillers. A small amount of metal ions (such as Mg²⁺, Al³⁺, Cu²⁺, Fe³⁺) that show an alkalinity are more or less contained in most of the fillers. The presence of these alkaline metal ions will not only influence the color of the fillers, but also cause rapid decreases in the molding tenacity and the molding use stability. In the present invention, controlling a content of copper element in the composite material between 0.1 ppm and 10 ppm and controlling a content of iron element in the composite material between 5 ppm and 40 ppm by adding a small amount of a copper-containing compound and an iron elementary substance or an iron-containing compound into the composite material, and by reducing or avoiding an addition of other copper-containing compounds and other iron-containing compounds, can not only avoid a pretreatment for filler powders, but also stabilize the alkaline ions in the system and reduce a darkened color and a property damage caused by an introduction of a screw or other metal ions. The polycarbonate composite material prepared is enabled to have obviously improved molding tenacity, flexural modulus and impact strength, and also to combine the rigidity brought by the filler and to have excellent molding use stability and excellent color stability. A suitable additive amount of the copper-containing compound is that the content of copper element in the composite material is controlled between 0.1 ppm and 10 ppm. A suitable additive amount of the iron elementary substance or the iron-containing compound is that the content of iron element in the composite material is controlled between 5 ppm and 40 ppm. Since a polycarbonate composite resin is sensitive to metal ions, if the content of iron element and the content of copper element are too high, the composite material will degrade during the production and processing, the properties will be attenuated, and meanwhile the color stability will be decreased.

Based on the total weight of the polycarbonate composite material, the weight content of iron element is 5 ppm-40 ppm, preferably 10 ppm-30 ppm, and the weight content of copper element is 0.1 ppm-10 ppm, more preferably 1 ppm-5 ppm.

Particularly, the iron element is derived from the iron elementary substance or the iron-containing compound, and specifically selected from one or more of ferric chloride, ferrous chloride, ferric nitrate, ferric sulfate, ferrous sulfate, and an iron complex.

Particularly, the copper element is derived from the copper-containing compound, and specifically selected from one or more of cupric chloride, cupric nitrate, cupric sulfate, a copper complex, a cupric ion ionomer and the like.

The polycarbonate is selected from a homo-polycarbonate or a co-polycarbonate that contains a repeating structural unit of carbonate.

The polycarbonate may have a weight-average molecular weight of about 15000-40000, and the weight-average molecular weight may be measured by a method well known in the art. A processing flowability and a mechanical property can be combined while the polycarbonate within such range of weight-average molecular serves as a modifying component. If the weight-average molecular weight is less than 15000, the modified composition will lose tenacity and can't satisfy a use requirement for product. If the weight-average molecular weight is greater than 40000, the processing will be difficult, and a rejection rate and an energy consumption will be increased.

Meanwhile, the polycarbonate has a PDI coefficient ranging from 2.0 to 4.0. The PDI coefficient is a polydispersity index, which is measured based on a BPA polycarbonate standard gel chromatography method. If a PDI value is greater than or equal to 1, the PDI value represents a uniformity of a polymer molecular chain.

According to ASTM D1238, a melt flow rate of the polycarbonate measured at 300 °C under a load of 1.2 kg is 3g/10min-30g/10min; and a general molding temperature of the composition is 300 °C. At this processing temperature, if the flow rate of the polycarbonate is too low, a viscosity will be too large, and a compatibility of the polycarbonate with other components in the composition will be poor, finally resulting in an increase of instability of the product properties. If the flow rate of the polycarbonate is greater than 30g/10min, it indicates a relatively high content of terminal groups of the molecular chains with a high activity, and the mechanical property and the color stability of the product tend to fail due to an intrusion of heat and oxygen during the processing.

The ABS is an acrylonitrile-butadiene-styrene graft copolymer, which is prepared by a method well known in the art, and it may prepared by an emulsion method or a solution method. Specifically, first providing a main polymer chain to prepare a graft copolymer by a polymerization of a conjugated diene such as butadiene or other monomers that can be copolymerized, such as styrene; after the main polymer chain is formed, polymerizing at least one kind of graft monomers, and specifically polymerizing two kinds of graft monomers in the presence of the main polymer chain to obtain the graft copolymer.

The ABS may be obtained by an emulsion polymerization method or a bulk polymerization method.

The ABS copolymer has an average particle size ranging from 500 nm to 2000 nm, preferably has an average particle size ranging from 750 nm to 1250 nm, and more preferably an average particle size ranging from 900 nm to 1100 nm. If the average particle size is greater than 2000 nm, dispersion of the ABS in a substrate will be largely reduced; if the average particle size is less than 500 nm, requirements for synthesis processing will be strict, and a yield is relatively low that can't satisfy the requirements for industrialization.

A glass transition temperature of the ABS copolymer is greater than 25 °C, preferably greater than 70 °C, and more preferably greater than 100 °C. While the glass transition temperature is too low, a content of a rubber will be too high and the compatibility will be influenced; while the glass transition temperature is too high, a polarity of the ABS will be high and a surface energy will be large, increasing a difficulty of dispersion.

The filler is a mineral filler, and specifically may be a talcum powder, a wollastonite, a kaolin, a clay, a whisker, a kieselguhr and so on. A volume surface area value of the filler may range from 20 µm to 90 µm.

The filler may be without any surface treatment, or a coating treatment may also be performed on the filler, such as an alkyl surface coating, an epoxy surface treatment, an amide surface treatment, a hydroxyl silicone oil treatment, an alkylsilane treatment, a methoxylsilane treatment, a sulfonate group treatment and the like.

According to different needs of use, the polycarbonate composite material of the present invention may further comprise 0-20 parts by weight of an antioxidant, a light stabilizer, an impact modifier, a fire retardant, a fluorescent brightener, a lubricant, a plasticizer, a flexibilizer, an antistatic agent, a releasing agent, a pigment and the like.

The antioxidant is selected from one or more of a hindered amines antioxidant, a hindered phenols antioxidant and a phosphite esters antioxidant, and specifically one or a mixture of two or more of 1010, 168, 1076, 445 and 1098, may be listed.

The flexibilizer is one or a mixture of an EVA type flexibilizer, an EMA type flexibilizer, an ASA type flexibilizer, an AES type flexibilizer, a SAS type flexibilizer, an acrylate flexibilizer and an organic silicon flexibilizer.

The light stabilizer is one or a mixture of a hindered amines absorbent and an ultraviolet absorbent, and specifically one or a mixture of two or more of UV-944, UV-234, 770DF, 328, 531 and 5411, may be listed.

The impact modifier is one or a mixture of two of PTW and a styrene-ethylene/butylene-styrene block copolymer SEBS.

The fire retardant is a phosphate based fire retardant, and specifically may be one or a mixture of two or more of bisphenol A-bis(diphenyl phosphate) BDP, red phosphorus, OP1240 and OP1230.

The fluorescent brightener is one or a mixture of bis(triazinylamino)stilbene and titanium dioxide.

The lubricant is one of or a mixture of two or more of a talcum powder, an ethylene bis stearamide EBS, an erucyl amide, a zinc stearate and a silicon oil.

The plasticizer is one or a mixture of two or more of a glycerinum, a citric acid, a butyl citrate and an epoxidized soybean oil.

The antistatic agent is a permanent antistatic agent, and specifically one or a mixture of two or more of PELESTAT-230, PELESTAT-6500 and SUNNICO ASA-2500, may be listed.

The releasing agent is one or a mixture of two or more of a silicon oil, a paraffin, a white mineral oil and a vaseline.

The pigment is one or a mixture of two or more of a carbon black, a black masterbatch, a titanium oxide, zinc sulfide, a phthalocyanine blue and a fluorescent orange.

A way of acquiring the iron element and the copper element of the present invention, may be directly adding the iron elementary substance or the iron-containing compound and the copper-containing compound during the processing of the polycarbonate composite material. The suitable additive amounts of the iron elementary substance or the iron-containing compound and the copper-containing compound are that the content of iron element in the composite material reaches 5 ppm-40 ppm, and the content of copper element in the composite material reaches 0.1 ppm-10 ppm.

The flexural modulus of the polycarbonate composite material of the present invention is greater than 7000 MPa at the temperature of 23 °C in a sample strip with a size of 12.6 mm × 3.2 mm and a length greater than 100 mm.

A notch impact strength of the polycarbonate composite material of the present invention is greater than 70 J/m at a temperature of 23 °C by using a 2.75 J pendulum bob in a sample strip with a size of 12.6 mm × 3.2 mm × 67 mm.

The molding tenacity of the polycarbonate composite material of the present invention is rated A grade with a thickness of 1.2 mm and a length and a width of 100 mm × 100 mm.

The polycarbonate composite material of the present invention not only has excellent flexural modulus, impact strength and molding tenacity, but also can combine the rigidity brought by the filler, and has excellent molding use stability and excellent color stability. The polycarbonate composite material of the present invention can be used in thin-wall products having a reinforcement characteristic in fields that require relatively high rigidity such as shells of laptops and housing of household appliances.

Compared with the prior art, the present invention has the following advantageous effects:
it has been surprisingly found that controlling a content of copper element in the composite material between 0.1 ppm and 10 ppm and controlling a content of iron element in the composite material between 5 ppm and 40 ppm by adding a small amount of a copper-containing compound and an iron elementary substance or an iron-containing compound into the composite material, and by reducing or avoiding an addition of other copper-containing compounds and other iron-containing compounds, can not only avoid a pretreatment for the filler powders, but also stabilize the alkaline ions in the system and reduce a darkened color and the property damage caused by an introduction of a screw and other metals. The polycarbonate composite material prepared is enabled to have obviously improved molding tenacity, flexural modulus and impact strength, and also to combine the rigidity brought by the filler, and to have excellent molding use stability and color stability.

### DETAILED DESCRIPTION OF THE PREFERRED EMBODIMENT

The present invention will be further described below by detailed implementations. The following embodiments are preferred implementations of the present invention, but the implementations of the present invention are not limited by the following embodiments.
PC: homopolymer, with a weight-average weight of 30000, a PDI coefficient of 3.0, and a melt flow rate of 10 g/10 min, IDEMITSU, Japan;
ABS1: SAN graft butadiene, with an average particle size of 1000 nm and a glass transition temperature of 110 °C;
ABS2: SAN graft butadiene, with an average particle size of 750 nm and a glass transition temperature of 80 °C;
ABS3: SAN graft butadiene, with an average particle size of 1500 nm and a glass transition temperature of 60 °C;
iron-containing compound, iron elementary substance and copper-containing compound: all are commercially available;
filler 1: talcum powder, with a volume surface area of 29 µm and an alkyl surface coated with Imery;
filler 2: wollastonite, with a volume surface area of 46 µm and an alkyl surface coated with Nyclos;
other aids: flexibilizer: MBS, MITSUBISHI;
   antioxidant 1076, Ciba;
   antioxidant 168, Ciba;
   releasing agent PETS, LONZA;
   light stabilizer 5411, CYTEC.

### Embodiments 1-14 and Comparative Embodiments 1-2: Preparation of the Polycarbonate Composite Material

Blending a polycarbonate, the ABS resin, the copper-containing compound and the iron elementary substance, the iron-containing compound, and the filler in a high-speed mixer in accordance with formulas shown in Table 1 to obtain a pretreated resin substrate; after weighing the pretreated resin substrate and other aids in proportion, blending via the high-speed mixer or a mixer, with an extruding temperature of 240 °C, cooling by means of water, and pelletizing to obtain a columnar particulate polycarbonate composite material. Ratios of each component and property test results are shown as Table 1.

### Evaluation method of each property:

### (1) Flexural modulus:

The polycarbonate composite material was injection molded under an injection temperature of 260 °C, and a mold temperature was 100°C. A sample strip was a test sample piece with a size of 12.6 mm × 3.2 mm and a length greater than 100 mm. The flexural modulus of 23 °C was tested by using a universal testing machine Autogragf made by Shimadzu Corporation, and a speed of a pressure sensing rod of a sensor was 1 mm/min.

### (2) Impact strength

The polycarbonate composite material was injection molded under an injection temperature of 260 °C, and a mold temperature was 100 °C. A size of a sample strip was 12.6 mm × 3.2 mm × 67 mm, and the notch impact strength of 23 °C was tested by using a 2.75 J pendulum bob.

### (3) Stability

Particles of the polycarbonate composite material was put into a 60 mm × 60 mm × 20 mm stainless steel box which was cushioned with 1 mm of a teflon film, taken out after being placed in a constant temperature-humidity instrument (the temperature was 85 °C, and the humidity was 85%) for 100 hours, then pretreated for 4 hours in a vacuum dryer at a predetermined temperature of 100°C, and performed a flowing test on a melt index instrument of 260 °C applied with a 2.16 kg weight.

### (4) Molding tenacity

The polycarbonate composite material was injection molded under an injection temperature of 260 °C, and a mold temperature was 100 °C. A size of a sample strip was 100 mm × 100 mm × 1.5 mm. After being placed at room temperature for 48 hours, the sample strip was bent for 180 degrees back and forth, and a bending times was recorded once a crack appeared. The polycarbonate composite material was evaluated as A+ grade while the bending times was greater than 30; the polycarbonate composite material was evaluated as A grade while the bending times was less than 30 and greater than 20; the polycarbonate composite material was evaluated as A- grade while the bending times was less than 20 and greater than 10; the polycarbonate composite material was evaluated as B grade while the bending times was less than 10 and greater than 5; the polycarbonate composite material was evaluated as C grade while the bending times was less than 5 and greater than 2; and the polycarbonate composite material was evaluated as D grade while the bending times was less than 2.

### (5) Evaluation of molding use stability

10 g of particles of the polycarbonate composite material were put into a 100 cc flask, and 30 cc of deionized water was poured into the flask. An acid base titration was performed after the flask was immerged into a 85 °C water bath for 4 hours, because the presence of alkaline substances in the polycarbonate composite material may cause a change in the pH of the deionized water. The polycarbonate composite material was evaluated as excellent while the pH ranges from 6.8 to 7.0; the polycarbonate composite material was evaluated as very good while the pH was greater than 7.0 and less than 7.2; the polycarbonate composite material was evaluated as good while the pH was greater than 7.2 and less than 7.3; and the polycarbonate composite material was evaluated as bad while the pH was greater than 7.5;

### (6) Test method of a content of iron element and a content of a copper element

2 g of particles of the polycarbonate composite material were accurately weighed in an analytical balance, and were poured into a 100 mL digestion bottle, and then 5 mL of 97% concentrated sulfuric acid were added. The digestion bottle was heated for 10 minutes in an iron plate heating instrument at a predetermined temperature of 300 °C, and then 5 mL of 68% nitric acid was added, and the digestion bottle was remained heated for 20 minutes. After the particles were totally resolved, they were cooled to room temperature. The above-described liquid was diluted with the deionized water after 20 mL of hydrogen peroxide were added to neutralize an acidity until the pH was 7. The liquid was introduced into an ICP detecting instrument through an injection tube to determine a concentration of the iron element and a concentration of the copper element.

### (7) Color stability

The polycarbonate composite material was injection molded to produce a plate with a thickness of 2 mm, a width of 40 mm and a length of 100 mm. Particularly, a mold temperature was set as 80 °C, and the injection plates were performed a color difference test after being adjusted for 48 hours at room temperature of 23 °C and the humidity of 50%; at the same time, a plate with a thickness of 2 mm, a width of 40 mm and a length of 100 mm was produced according to the injection conditions of (3). Particularly, the mold temperature was set as 80 °C, and the injection plates were performed the color difference test after being adjusted for 48 hours at room temperature of 23 °C and the humidity of 50%. A difference between these two test plates (ΔE) was calculated. The smaller the difference, the smaller the variation of a hue.

**Table 1 Ratios (parts by weight) of each component and other property test results in Embodiments 1-14 and Comparative Embodiments 1-2 (Embodiments 8-10 are not according to the invention)**

| | | Embodi ment 1 | Emb odim ent 2 | Emb odim ent 3 | Emb odim ent 4 | Emb odim ent 5 | Emb odim ent 6 | Emb odim ent 7 | Emb odim ent 8 | Emb odim ent 9 | Emb odim ent 10 | Emb odim ent 11 | Emb odim ent 12 | Emb odim ent 13 | Emb odim ent 14 | Com parat ive Emb odim ent 1 | Com parat ive Emb odim ent 2 |
|---|---|---|---|---|---|---|---|---|---|---|---|---|---|---|---|---|---|
| PC | | 60 | 60 | 60 | 60 | 60 | 60 | 60 | 60 | 60 | 60 | 60 | 60 | 60 | 60 | 60 | 60 |
| ABS1 | | 10 | 10 | 10 | 10 | 10 | 10 | 10 | 10 | 10 | 10 | 10 | 10 | | | 10 | 10 |
| ABS2 | | | | | | | | | | | | | | 10 | | | |
| ABS3 | | | | | | | | | | | | | | | 10 | | |
| Filler 1 | | 30 | 30 | 30 | 30 | 30 | 30 | 30 | 30 | 30 | 30 | 20 | 10 | 30 | 30 | 30 | 30 |
| filler 2 | | | | | | | | | | | | 10 | 20 | | | | |
| other aids | flexibi lizer | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | antiox idant 1076 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | antiox idant 168 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | releasi ng agent PETS | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | light stabili zer 5411 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| iron-containing compound | | ferric chloride | iron | ferric chloride | iron | ferrous nitrate | iron | iron | iron | iron | iron | iron | iron | iron | iron | iron | iron |
| copper-containing compound | | cop-per complex | copper complex | copper chloride | copper complex | copper complex | copper sulfate | copper complex | copper complex | copper complex | copper nitrate | copper complex | copper complex | copper complex | copper complex | copper complex | copper complex |
| content of iron element (based on the whole composite material) (ppm) | | 10 | 20 | 30 | 5 | 8 | 35 | 40 | 0.1 | 3 | 50 | 20 | 20 | 30 | 30 | 0.05 | 60 |
| content of copper element (based on the whole composite material) (ppm) | | 1 | 3 | 5 | 0.1 | 0.5 | 8 | 10 | 0.01 | 15 | 20 | 3 | 3 | 5 | 5 | 0.00 5 | 30 |
| flexural modulus (MPa) | | 7433 | 7522 | 7508 | 7231 | 7330 | 7220 | 7343 | 7070 | 7115 | 7050 | 7220 | 7350 | 7228 | 7075 | 4300 | 4215 |
| notch impact strength (J/m) | | 100 | 97.3 | 102 | 74 | 83 | 81 | 75 | 70 | 73 | 70 | 90 | 89 | 74 | 70 | 22 | 33 |
| stability g/10 min | | 12.5 | 13.3 | 10.1 1 | 20.3 | 26.4 | 30.1 1 | 32.2 1 | 38.0 9 | 40.1 2 | 35.9 8 | 19.3 5 | 18.2 6 | 12.3 8 | 14.2 9 | 107 | 122 |
| molding tenacity (grade) | | A+ | A+ | A+ | A | A | A | A | A- | A- | A- | A+ | A+ | A+ | A+ | D | C |
| use stability (grade) | | excellent | excellent | excellent | very good | very good | very good | very good | good | good | good | excellent | excellent | excellent | excellent | bad | bad |
| color stability ΔE | | 0.02 | 0.04 | 0.08 | 0.14 | 0.26 | 0.32 | 0.55 | 0.57 | 0.63 | 0.82 | 0.06 | 0.08 | 0.13 | 0.20 | 3.2 | 3.9 |

It may be seen from the Embodiments 1-14 in Table 1 that the content of iron element in the polycarbonate composite material is within a range of 5 ppm to 40 ppm, the content of copper element is within a range of 0.1 ppm to 10 ppm, the flexural modulus of the polycarbonate composite material is greater than 7000 MPa, the notch impact strength is greater than 70 J/m, and the molding tenacity is A grade. Meanwhile, these polycarbonate composite materials have a relatively good use stability and color stability. In the Comparative Embodiments 1-2, when the content of iron element in the polycarbonate composite material is less than 5 ppm or greater than 40 ppm and the content of copper element is less than 0.1 ppm or greater than 10 ppm, the flexural modulus, the impact strength, the molding tenacity, the molding use stability and the color stability of the polycarbonate composite material are obviously worse than those of the Embodiments. It can be seen that by controlling the contents of iron element and copper element in the polycarbonate composite material, the prepared polycarbonate composite material has an obviously improved impact strength and an obviously improved molding tenacity, and can also combine a rigidity brought by the filler, having excellent molding use stability and excellent color stability, with excellent comprehensive properties.

## Claims

1. A polycarbonate composite material, **characterized in that**, it comprises the following components:
30-80 parts by weight of a polycarbonate;
5-40 parts by weight of an ABS;
5-80 parts by weight of a filler;
wherein,
based on a total weight of the polycarbonate composite material, a weight content of iron element is 5 ppm-40 ppm, and a weight content of copper element is 0.1 ppm-10 ppm;
the polycarbonate has a PDI coefficient ranging from 2.0 to 4.0;
a melt flow rate of the polycarbonate measured according to ASTM D1238 at 300°C under a load of 1.2 kg is 3g/10min-30g/10min;
the ABS copolymer has an average particle size ranging from 500 nm to 2000 nm;
a glass transition temperature of the ABS copolymer is greater than 25°C; and
the filler is a mineral filler.

2. The polycarbonate composite material according to claim 1, wherein the weight content of iron element and the weight content of copper element are measured by the following method: accurately weighing 2 g of particles of the polycarbonate composite material in an analytical balance, pouring the particles into a 100 mL digestion bottle, and then adding 5mL of 97% concentrated sulfuric acid, heating for 10 minutes in an iron plate heating instrument at a predetermined temperature of 300 °C, and then adding 5 mL of 68% nitric acid, remaining being heated for 20 minutes, cooling to room temperature after the particles are totally resolved, adding 20 mL of hydrogen peroxide to neutralize an acidity until the pH is 7 followed by diluting the above-described liquid with the deionized water, and introducing the liquid into an ICP detecting instrument through an injection tube to determine a concentration of iron element and a concentration of copper element.

3. The polycarbonate composite material according to claim 1, wherein based on the total weight of the polycarbonate composite material, the weight content of iron element is 10 ppm-30 ppm, and the weight content of copper element is 1 ppm-5 ppm.

4. The polycarbonate composite material according to claim 1, wherein the polycarbonate is a homo-polycarbonate or a co-polycarbonate, and a weight-average molecular weight of the polycarbonate is 15000-40000.

5. The polycarbonate composite material according to claim 1, wherein the ABS is prepared by an emulsion method or a solution method, with an average particle size of 750 nm - 1250 nm, preferably 900 nm - 1100 nm, and with a glass transition temperature greater than 70 °C, preferably greater than 100 °C.

6. The polycarbonate composite material according to claim 1, wherein the iron element is derived from an iron elementary substance or an iron-containing compound, and the iron-containing compound is selected from one or more of ferric chloride, ferrous chloride, ferric nitrate, ferric sulfate, ferrous sulfate and an iron complex.

7. The polycarbonate composite material according to claim 1, wherein the copper element is derived from a copper-containing compound, and the copper-containing compound is one or more of cupric chloride, cupric nitrate, cupric sulfate, a cupric complex and a cupric ion ionomer.

8. The polycarbonate composite material according to claim 1, wherein the polycarbonate composite material further comprises 0-20 parts by weight of one or more of an antioxidant, a light stabilizer, an impact modifier, a fire retardant, a fluorescent brightener, a lubricant, a plasticizer, a flexibilizer, an antistatic agent, a releasing agent and a pigment.

9. The polycarbonate composite material according to anyone of claims 1 to 8, wherein a flexural modulus of the polycarbonate composite material is 7000 MPa at a temperature of 23 °C in a sample strip with a size of 12.6 mm × 3.2 mm and a length greater than 100 mm.

10. The polycarbonate composite material according to anyone of claims 1 to 10, wherein a notch impact strength of the polycarbonate composite material is greater than 70J/m at a temperature of 23 °C by using a 2.75 J pendulum bob in a sample strip with a size of 12.6 mm × 3.2 mm × 67 mm.

11. The polycarbonate composite material according to anyone of claims 1 to 10, wherein a molding tenacity of the polycarbonate composite material with a thickness of 1.2 mm and a length and width of 100 mm × 100 mm is rated A grade.

## Patentansprüche

1. Polycarbonat-Verbundmaterial, **dadurch gekennzeichnet, dass** es die folgenden Komponenten umfasst:
30-80 Gewichtsanteile eines Polycarbonats;
5-40 Gewichtsanteile eines ABS;
5-80 Gewichtsanteile eines Füllstoffes;
worin,
aufgrund eines Gesamtgewichts des Polycarbonat-Verbundmaterials, ein Gewichtsgehalt des Eisenelementes 5 ppm - 40 ppm beträgt, und ein Gewichtsgehalt des Kupferelementes 0.1 ppm - 10 ppm beträgt;
das Polycarbonat einen PDI-Koeffizienten hat, der im Bereich von 2.0 bis 4.0 liegt; eine Schmelzflussrate des Polycarbonats, gemessen nach ASTM D1238 bei 300°C unter einer Last von 1.2 kg, 3 g/10 min - 30 g/10 min beträgt;
das ABS-Copolymer eine durchschnittliche Teilchengröße hat, die im Bereich von 500 nm bis 2000 nm liegt;
eine Glasübergangstemperatur des ABS-Copolymers größer als 25°C ist; und
der Füllstoff ein Mineralfüllstoff ist.

2. Polycarbonat-Verbundmaterial nach Anspruch 1, worin der Gewichtsgehalt des Eisenelementes und der Gewichtsgehalt des Kupferelementes durch das folgende Verfahren gemessen werden: genaues Wiegen von 2 g Teilchen des Polycarbonat-Verbundmaterials in einer Analysenwaage, Gießen der Teilchen in eine 100 mL-Aufschlussflasche, und dann Hinzufügen von 5 mL von 97% konzentrierter Schwefelsäure, Heizen 10 Minuten lang in einem Eisenplatte-Heizinstrument bei einer vorbestimmten Temperatur von 300 °C, und dann Hinzufügen von 5 mL von 68% Salpetersäure, wobei der Restteil 20 Minuten lang geheizt wird, Kühlen auf Raumtemperatur, nachdem die Teilchen völlig gelöst sind, Hinzufügen von 20 mL von Wasserstoffperoxid, um eine Azidität zu neutralisieren, bis der pH 7 beträgt, gefolgt von Verdünnen der oben beschriebenen Flüssigkeit mit dem deionisierten Wasser, und Einführen der Flüssigkeit in ein ICP-Detektionsinstrument durch ein Injektionsrohr, um eine Konzentration des Eisenelementes und eine Konzentration des Kupferelementes zu bestimmen.

3. Polycarbonat-Verbundmaterial nach Anspruch 1, worin aufgrund des Gesamtgewichts des Polycarbonat-Verbundmaterials der Gewichtsgehalt des Eisenelementes 10 ppm-30 ppm beträgt und der Gewichtsgehalt des Kupferelementes 1 ppm - 5 ppm beträgt.

4. Polycarbonat-Verbundmaterial nach Anspruch 1, worin das Polycarbonat ein Homo-Polycarbonat oder ein Co-Polycarbonat ist, und ein Gewichtsmittel-Molekulargewicht des Polycarbonats 15000 - 40000 beträgt.

5. Polycarbonat-Verbundmaterial nach Anspruch 1, worin das ABS durch ein Emulsionsverfahren oder ein Lösungsverfahren, mit einer durchschnittlichen Teilchengröße von 750 nm - 1250 nm, vorzugsweise 900 nm - 1100 nm, und mit einer Glasübergangstemperatur größer als 70 C°, vorzugsweise größer als 100 C°, hergestellt wird.

6. Polycarbonat-Verbundmaterial nach Anspruch 1, worin das Eisenelement aus einem Eisengrundstoff oder einer eisenhaltigen Verbindung abgeleitet wird, und die eisenhaltige Verbindung aus einem oder mehreren von Eisen(III)-Chlorid, Eisen(II)-Chlorid, Eisen(III)-Nitrat, Eisen(III)-Sulfat, Eisen(II)-Sulfat und einem Eisenkomplex ausgewählt wird.

7. Polycarbonat-Verbundmaterial nach Anspruch 1, worin das Kupferelement aus einer kupferhaltigen Verbindung abgeleitet wird, und die kupferhaltige Verbindung eines oder mehrere von Kupfer(II)-Chlorid, Kupfer(II)-Nitrat, Kupfer(II)-Sulfat, einem Kupferkomplex und einem Kupfer-Ionionomer ist.

8. Polycarbonat-Verbundmaterial nach Anspruch 1, worin das Polycarbonat-Verbundmaterial ferner 0-20 Gewichtsanteile von einem oder mehreren von einem Antioxidationsmittel, einem Lichtstabilisator, einem Schlagzähmodifizierer, einem feuerhemmenden Mittel, einem fluoreszenten Aufheller, einem Schmiermittel, einem Weichmacher, einem Flexibilisierungsmittel, einem antistatischen Mittel, einem Trennmittel und einem Pigment umfasst.

9. Polycarbonat-Verbundmaterial nach einem der Ansprüche 1 bis 8, worin ein Biegemodul des Polycarbonat-Verbundmaterials 7000 MPa bei einer Temperatur von 23 °C in einem Stichprobenstreifen mit einer Größe von 12.6 mm × 3.2 mm und einer Länge größer als 100 mm beträgt.

10. Polycarbonat-Verbundmaterial nach einem der Ansprüche 1 bis 10, worin eine Kerbschlagzähigkeit des Polycarbonat-Verbundmaterials größer als 70 J/m bei einer Temperatur von 23 °C unter Verwendung eines 2.75 J-Pendelkörpers in einem Stichprobenstreifen mit einer Größe von 12.6 mm × 3.2 mm × 67 mm ist.

11. Polycarbonat-Verbundmaterial nach einem der Ansprüche 1 bis 10, worin eine Formzähigkeit des Polycarbonat-Verbundmaterials mit einer Dicke von 1.2 mm und einer Länge und Breite von 100 mm × 100 mm als A-Grad eingestuft wird.

## Revendications

1. Matériau composite de polycarbonate, **caractérisé en ce qu'**il comprend les composants suivants :
de 30 à 80 parties en poids d'un polycarbonate :
de 5 à 40 parties en poids d'un ABS ;
de 5 à 80 parties en poids d'une charge :
dans lequel,
sur la base du poids total du matériau composite de polycarbonate, une teneur en poids en élément en fer est de 5 ppm à 40 ppm, et une teneur en poids en élément en cuivre est de 0.1 ppm à 10 ppm ;
le polycarbonate a un coefficient PDI allant de 2.0 à 4.0 ;
un indice de fluidité à chaud du polycarbonate mesuré selon la norme ASTM D1238 à 300°C sous une charge de 1.2 kg est de 3 g/10 min à 30 g/10 min ;
le copolymère ABS a une taille moyenne de particules allant de 500 nm à 2000 nm ;
une température de transition vitreuse du copolymère ABS est supérieure à 25°C ; et
la charge est une charge minérale.

2. Matériau composite de polycarbonate selon la revendication 1, dans lequel la teneur en poids d'élément en fer et la teneur en poids d'élément en cuivre sont mesurées par le procédé suivant : peser avec précision 2 g de particules du matériau composite de polycarbonate dans une balance analytique, verser les particules dans un flacon de digestion de 100 ml, puis ajouter 5 ml d'acide sulfurique concentré à 97 %, chauffer pendant 10 minutes dans un instrument de chauffage à plaque de fer à une température prédéterminée de 300°C, puis ajouter 5 ml d'acide nitrique à 68 %, restant à chauffer pendant 20 minutes, refroidir à température ambiante après que les particules soient totalement résolues, ajouter 20 ml de peroxyde d'hydrogène pour neutraliser une acidité jusqu'à ce que le pH soit de 7, puis diluer le liquide décrit ci-dessus avec l'eau désionisée, et introduire le liquide dans un instrument de détection ICP à travers un tube d'injection pour déterminer une concentration d'élément en fer et une concentration d'élément en cuivre.

3. Matériau composite de polycarbonate selon la revendication 1, dans lequel, sur la base du poids total du matériau composite de polycarbonate, la teneur en poids en élément en fer est de 10 ppm à 30 ppm et la teneur en poids en élément en cuivre est de 1 ppm à 5 ppm.

4. Matériau composite de polycarbonate selon la revendication 1, dans lequel le polycarbonate est un homo-polycarbonate ou un co-polycarbonate, et un poids moléculaire moyen en poids du polycarbonate est de 15000 à 40000.

5. Matériau composite de polycarbonate selon la revendication 1, dans lequel l'ABS est préparé par un procédé en émulsion ou un procédé en solution, avec une taille moyenne de particules de 750 nm à 1250 nm, de préférence de 900 nm à 1100 nm, et avec une température de transition vitreuse supérieure à 70°C, de préférence supérieure à 100°C.

6. Matériau composite de polycarbonate selon la revendication 1, dans lequel l'élément en fer est dérivé d'une substance élémentaire en fer ou d'un composé contenant du fer, et le composé contenant du fer est choisi parmi un ou plusieurs parmi le chlorure ferrique, le chlorure ferreux, le nitrate ferrique, le sulfate ferrique, le sulfate ferreux et un complexe de fer.

7. Matériau composite de polycarbonate selon la revendication 1, dans lequel l'élément en cuivre est dérivé d'un composé contenant du cuivre, et le composé contenant du cuivre est un ou plusieurs parmi le chlorure cuivrique, le nitrate cuivrique, le sulfate cuivrique, un complexe cuivrique et un ionomère ionique cuivrique.

8. Matériau composite de polycarbonate selon la revendication 1, dans lequel le matériau composite de polycarbonate comprend en outre de 0 à 20 parties en poids d'un ou plusieurs parmi un antioxydant, un photostabilisant, un modificateur de choc, un ignifuge, un azurant fluorescent, un lubrifiant, un plastifiant, un flexibilisant, un agent antistatique, un agent de libération et un pigment.

9. Matériau composite de polycarbonate selon l'une quelconque des revendications 1 à 8, dans lequel un module de flexion du matériau composite de polycarbonate est de 7000 MPa à une température de 23°C dans une bande d'échantillon avec une taille de 12.6 mm × 3.2 mm et une longueur supérieure à 100 mm.

10. Matériau composite de polycarbonate selon l'une quelconque des revendications 1 à 10, dans lequel une résistance aux chocs d'encoche du matériau composite de polycarbonate est supérieure à 70 J/m à une température de 23°C en utilisant une pendule bob de 2.75 J dans une bande d'échantillon avec une taille de 12.6 mm × 3.2 mm × 67 mm.

11. Matériau composite de polycarbonate selon l'une quelconque des revendications 1 à 10, dans lequel une ténacité de moulage du matériau composite de polycarbonate avec une épaisseur de 1.2 mm et une longueur et une largeur de 100 mm × 100 mm est de qualité A.
